# FASCICULE DE BREVET EUROPEEN

(11) **EP 4 051 976 B1**
(45) Date de publication et mention de la délivrance du brevet: **22.05.2024**
(21) Numéro de dépôt: 20807466.6
(22) Date de dépôt: 20.10.2020
(51) Int. Cl.: F28D 9/00, F28D 21/00, F28F 9/02, H01M 10/625, H01M 10/613, B60H 1/00, B60H 1/32, H01M 10/6556, H01M 10/6568, H01M 10/663

(54) **DISPOSITIF D'ÉCHANGE D'ÉNERGIE CALORIFIQUE COMPORTANT DEUX ÉCHANGEURS DE CHALEUR À PLAQUES**
APPARATUR ZUM WÄRMEAUSTAUSCH MIT ZWEI PLATTENWÄRMETAUSCHERN
HEAT EXCHANGE SYSTEM COMPRISING TWO PLATE HEAT EXCHANGERS

(30) Priorité: 29.10.2019 FR 1912090
(43) Date de publication de la demande: 07.09.2022
(73) Titulaire: Valeo Systèmes Thermiques, 78320 Le Mesnil-Saint-Denis (FR)
(72) Inventeur: DENOUAL, Christophe, 72210 La Suze Sur Sarthe (FR); VERON, Julien, 72210 La Suze Sur Sarthe (FR)
(74) Mandataire: Valeo Systèmes Thermiques
(86) Numéro de dépôt international: PCT/FR2020/051890
(87) Numéro de publication internationale: WO 2021/084189

(56) Documents cités:
- FR-A1- 2 846 733
- US-A1- 2008 087 410
- US-A1- 2012 060 550
- US-A1- 2018 231 324

## Description

La présente invention concerne le domaine des échangeurs de chaleur à plaques.

Plus particulièrement l'invention concerne les échangeurs de chaleurs à plaques dans le domaine automobile. Un dispositif d'échange d'énergie calorifique comportant deux échangeurs de chaleur à plaques selon le préambule de la revendication 1 est divulgué par US 2018/231324 A1.

Dans le domaine automobile et plus particulièrement dans le domaine des véhicules électriques ou hybrides, il est connu d'utiliser la puissance de refroidissement générée par un circuit de climatisation pour refroidir les batteries. Pour cela, un ou plusieurs échangeurs de chaleur à plaques permettent les échanges d'énergie calorifique entre un fluide caloporteur circulant dans une boucle de gestion thermique des batteries et un fluide réfrigérant à basse pression circulant dans le circuit de climatisation.

Néanmoins, l'utilisation d'une charge rapide des batteries devient primordiale pour l'acceptation de la mobilité électrique. Cependant, plus le processus de charge est rapide, plus le courant électrique est élevé et donc plus la quantité de chaleur à dissiper est élevée. Les besoins en puissance de refroidissement sont ainsi fortement augmentés. Il en est de même en décharge rapide lors de forte vitesse de roulage.

Une solution connue pour fournir cette puissance de refroidissement supplémentaire est d'utiliser un échangeur de chaleur à plaques permettant un très haut niveau de puissance thermique d'échange entre le fluide caloporteur et le fluide réfrigérant. Pour cela, un échangeur de chaleur à plaques de grande taille est généralement utilisé. Cependant, un tel échangeur de chaleur à plaques permet de couvrir une grande plage de puissances thermiques car il répond au besoin sur haute charge, mais pas en moyenne charge où sa puissance thermique s'effondre avec la baisse des débits fluidiques et la mauvaise distribution dans le faisceau de plaques.

Un des buts de la présente invention est donc de remédier au moins partiellement aux inconvénients de l'art antérieur et de proposer un échangeur de chaleur à plaques dont la puissance thermique reste optimale pour différentes charges d'utilisation.

La présente invention concerne donc un dispositif d'échange d'énergie calorifique comportant un premier et un deuxième échangeur de chaleur à plaques, chaque échangeur de chaleur à plaques étant configuré pour permettre les échanges d'énergie calorifique entre au moins deux fluides caloporteurs à des températures différentes,
ledit dispositif d'échange comportant en outre un organe de distribution disposé en sandwich entre les premier et deuxième échangeurs de chaleur à plaques, ledit organe de distribution comportant une série de canaux ménagés en son sein, lesdits canaux reliant des entrées et sorties de fluide caloporteur des premier et deuxième échangeurs de chaleur à plaques à des orifices de connexion disposés sur ledit organe de distribution.

Selon l'invention, l'organe de distribution comporte un orifice de connexion d'arrivée de fluide caloporteur relié à une entrée de fluide caloporteur d'un des échangeur de chaleur à plaques, l'organe de distribution comportant un dispositif de détente du fluide caloporteur fixé sur ledit orifice de connexion d'arrivée de fluide caloporteur.

Selon un aspect de l'invention, l'organe de distribution comporte un orifice de connexion de sortie de fluide caloporteur relié à une sortie de fluide caloporteur d'un des échangeur de chaleur à plaques, l'organe de distribution comportant une ouverture débouchant dans ledit orifice de connexion de sortie de fluide caloporteur, un capteur de pression et/ou température du fluide caloporteur étant inséré dans ladite ouverture.

Selon un autre aspect de l'invention, l'orifice de connexion d'arrivé de fluide caloporteur comportant un dispositif de détente est connecté à un orifice de connexion de sortie de fluide caloporteur par un circuit de circulation passant au sein de l'échangeur de chaleur à plaques.

Selon un autre aspect de l'invention, le dispositif de détente et le capteur de pression et/ou température du fluide caloporteur sont disposés au sein d'un module unique de montage fixé sur l'organe de distribution.

Selon un autre aspect de l'invention, les premier et deuxième échangeurs de chaleur à plaques comportent chacun un premier circuit de circulation de fluide caloporteur reliant une première entrée et une première sortie de fluide caloporteur et un deuxième circuit de circulation reliant une deuxième entrée et une deuxième sortie de fluide caloporteur,
l'organe de distribution comportant :
∘ une première face sur laquelle est disposée le deuxième échangeur de chaleur à plaques, ladite première face comportant:
   ▪ une première extrémité débouchante d'un premier canal disposée en vis à vis de la première entrée de fluide caloporteur dudit deuxième échangeur de chaleur à plaques et reliée à un premier orifice de connexion par ledit premier canal,
   ▪ une deuxième extrémité débouchante d'un deuxième canal disposée en vis à vis de la première sortie de fluide caloporteur dudit deuxième échangeur de chaleur à plaques et reliée à un deuxième orifice de connexion par ledit deuxième canal,
   ▪ une troisième extrémité débouchante d'un troisième canal disposée en vis à vis de la deuxième entrée de fluide caloporteur dudit deuxième échangeur de chaleur à plaques et reliée à un troisième orifice de connexion par ledit troisième canal,
   ▪ une quatrième extrémité débouchante d'un quatrième canal disposée en vis à vis de la deuxième sortie de fluide caloporteur dudit deuxième échangeur de chaleur à plaques et reliée à un quatrième orifice de connexion par ledit quatrième canal,
∘ une deuxième face sur laquelle est disposée le premier échangeur de chaleur à plaques, ladite deuxième face comportant:
   ▪ une cinquième extrémité débouchante d'un cinquième canal disposée en vis à vis de la première entrée de fluide caloporteur dudit premier échangeur de chaleur à plaques et reliée à un cinquième orifice de connexion par ledit cinquième canal,
   ▪ une sixième extrémité débouchante d'un sixième canal disposée en vis à vis de la première sortie de fluide caloporteur dudit premier échangeur de chaleur à plaques et reliée à un sixième orifice de connexion par ledit sixième canal,
   ▪ une septième extrémité débouchante d'un septième canal disposée en vis à vis de la deuxième entrée de fluide caloporteur dudit premier échangeur de chaleur à plaques et reliée à un septième orifice de connexion par ledit septième canal,
   ▪ une huitième extrémité débouchante d'un huitième canal disposée en vis à vis de la deuxième sortie de fluide caloporteur dudit premier échangeur de chaleur à plaques et reliée à un huitième orifice de connexion par ledit huitième canal.

Selon un autre aspect de l'invention, au moins un des premier ou deuxième échangeurs de chaleur à plaques comporte un troisième circuit de circulation dont l'entrée et la sortie de fluide caloporteur sont disposées en dehors de l'organe de distribution.

Selon un autre aspect de l'invention, l'organe de distribution est réalisé en deux éléments :
- un premier élément comportant :
   ∘ une première face sur laquelle est disposée le deuxième échangeur de chaleur à plaques, ladite première face comportant la première extrémité débouchante du premier canal et la deuxième extrémité débouchante du deuxième canal, et
   ∘ une deuxième face sur laquelle est disposée le premier échangeur de chaleur à plaques, ladite deuxième face comportant la septième extrémité débouchante du septième canal et la huitième extrémité débouchante du huitième canal,
- un deuxième élément comportant :
   ∘ une première face sur laquelle est disposée le deuxième échangeur de chaleur à plaques, ladite première face comportant la troisième extrémité débouchante du troisième canal et la quatrième extrémité débouchante du quatrième canal, et
   ∘ une deuxième face sur laquelle est disposée le premier échangeur de chaleur à plaques, ladite deuxième face comportant la cinquième extrémité débouchante du cinquième canal et la sixième extrémité débouchante du sixième canal.

Selon un autre aspect de l'invention, l'organe de distribution est réalisé en une seule pièce.

Selon un autre aspect de l'invention, au moins une partie des orifices de connexions sont disposés sur la tranche de l'organe de distribution.

D'autres caractéristiques et avantages de la présente invention apparaîtront plus clairement à la lecture de la description suivante, fournie à titre illustratif et non limitatif, et des dessins annexés dans lesquels :
[Fig 1] La figure 1 est une représentation schématique en perspective d'un dispositif d'échange d'énergie calorifique,
[Fig 2] La figure 2 est une représentation schématique en perspective éclatée d'un échangeur de chaleur à plaques,
[Fig 3a] La figure 3a est une représentation schématique en perspective selon une deuxième coupe du dispositif d'échange d'énergie calorifique de la figure 1,
[Fig 3b] La figure 3b est une représentation schématique en perspective selon une première coupe du dispositif d'échange d'énergie calorifique de la figure 1,
[Fig 4a] La figure 4a est une représentation schématique en perspective de la première face d'un organe de distribution,
[Fig 4b] La figure 4b est une représentation schématique en perspective de la deuxième face d'un organe de distribution,
[Fig 5] La figure 5 est une représentation schématique en perspective d'un organe de distribution selon un premier mode de réalisation particulier,
[Fig 6] La figure 6 est une représentation schématique en perspective d'un organe de distribution selon un deuxième mode de réalisation particulier,
[Fig 7] La figure 7 est une représentation schématique en perspective d'un organe de distribution selon un troisième mode de réalisation particulier,
[Fig 8] La figure 8 est une représentation schématique d'un premier exemple d'architecture de connexion à un dispositif d'échange d'énergie calorifique,
[Fig 9] La figure 9 est une représentation schématique d'un deuxième exemple d'architecture de connexion à un dispositif d'échange d'énergie calorifique,
[Fig 10] La figure 10 est une représentation schématique en perspective et en coupe d'un échangeur de chaleur à plaques selon un mode de réalisation particulier,
[Fig 11] La figure 11 est une représentation schématique d'un troisième exemple d'architecture de connexion à un dispositif d'échange d'énergie calorifique,
[Fig 12] La figure 12 est une représentation schématique d'un quatrième exemple d'architecture de connexion à un dispositif d'échange d'énergie calorifique.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Sur les différentes figures, un trièdre XYZ est représenté afin de facilité la compréhension et montrer les différentes orientations de vues desdites figures les unes par rapport aux autres.

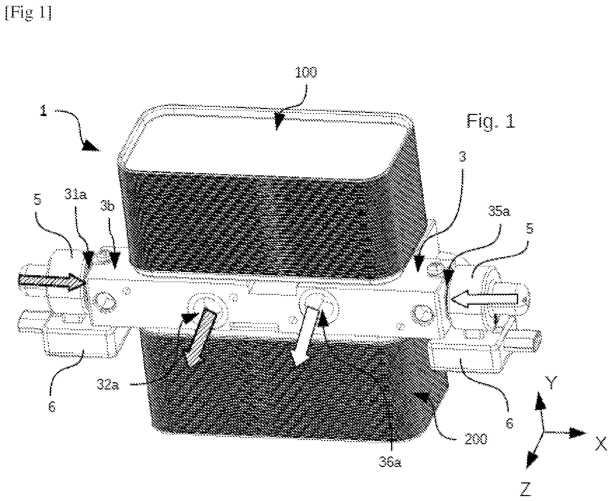

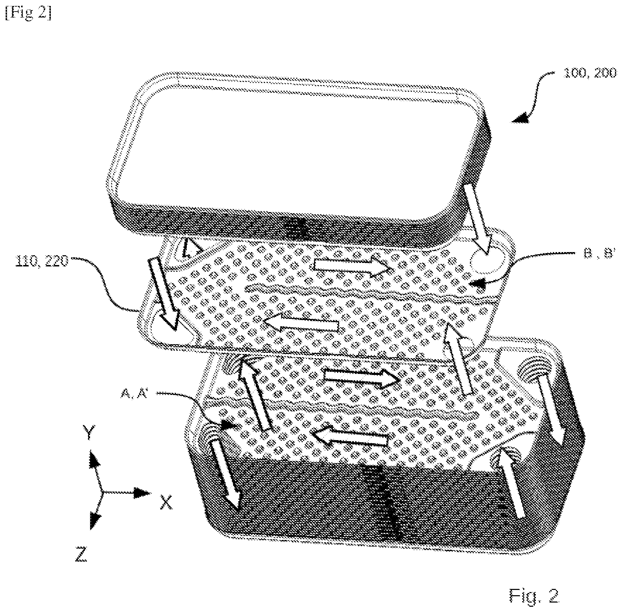

La figure 1 montre un dispositif d'échange d'énergie calorifique 1 comportant un premier 100 et un deuxième 200 échangeur de chaleur à plaques ainsi qu'un organe de distribution 3 disposé en sandwich entre les premier 100 et deuxième 200 échangeurs de chaleur à plaques. Chaque échangeur de chaleur à plaques 100, 200 est configuré pour permettre les échanges d'énergie calorifique entre au moins deux fluides caloporteur à des températures différentes. Pour cela, les échangeurs de chaleur à plaques 100, 200 comportent chacun un empilement de plaques 110, 210 définissant au moins deux circuits de circulation A, A' et B, B' de fluide caloporteur, comme illustré sur la figure 2. Ces circuits de circulation A, A' et B, B' permettent un échange d'énergie calorifique entre les deux fluides caloporteur.

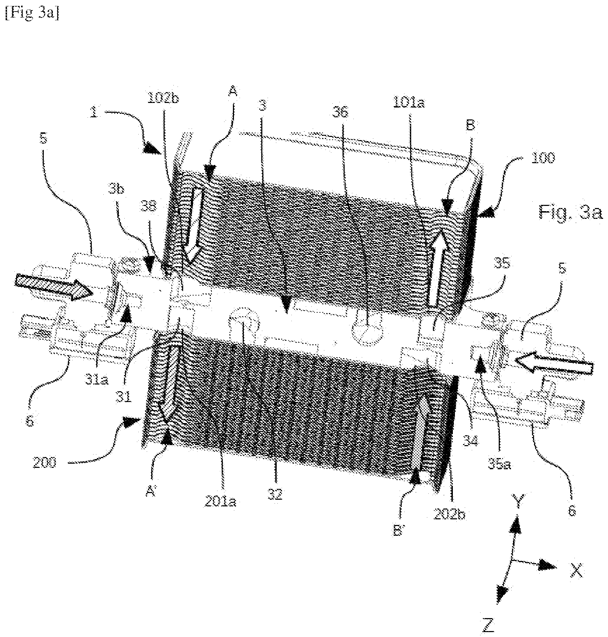

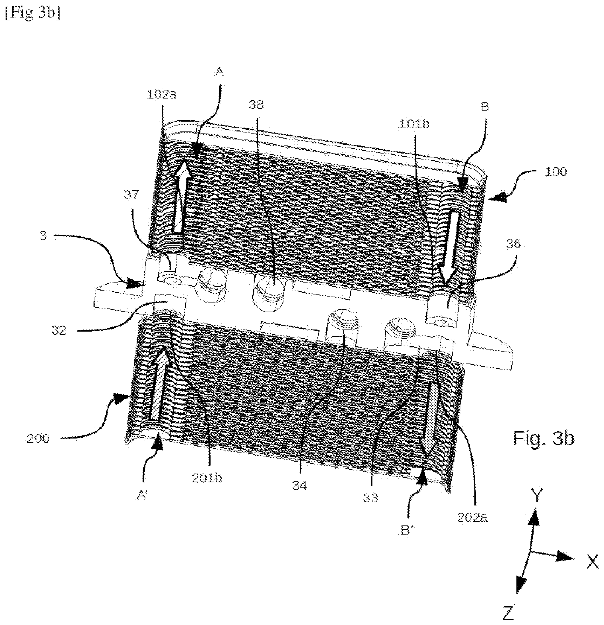

Les figures 3a et 3b montrent plus précisément le dispositif d'échange d'énergie calorifique 1 de la figure 1 selon deux coupes. La figure 3a est une coupe passant par une première entrée 101a et une deuxième sortie 102b du premier échangeur de chaleur à plaques 100 ainsi que passant par une première entrée 201a et une deuxième sortie 202b du deuxième échangeur de chaleur à plaques 200. La figure 3b est une coupe passant par une deuxième entrée 102a et une première sortie 101b du premier échangeur de chaleur à plaques 100 ainsi que passant par une deuxième entrée 202a et une première sortie 201b du deuxième échangeur de chaleur à plaques 200.

Le premier échangeur de chaleur à plaques 100 comporte ainsi :
- un premier circuit A de fluide caloporteur (représenté par une flèche blanche ) reliant la première entrée 101a à la première sortie 101b de fluide caloporteur, et
- un deuxième circuit B de fluide caloporteur (représenté par une flèche à hachures larges ) reliant la deuxième entrée 102a à la deuxième sortie 102b de fluide caloporteur.

De même, le deuxième échangeur de chaleur à plaques 200 comporte :
- un premier circuit A' de fluide caloporteur (représenté par une flèche à hachures serrées ) reliant la première entrée 201a à la première sortie 201b de fluide caloporteur, et
- un deuxième circuit B' de fluide caloporteur (représenté par une flèche grise ) reliant la deuxième entrée 202a à la deuxième sortie 202b de fluide caloporteur.

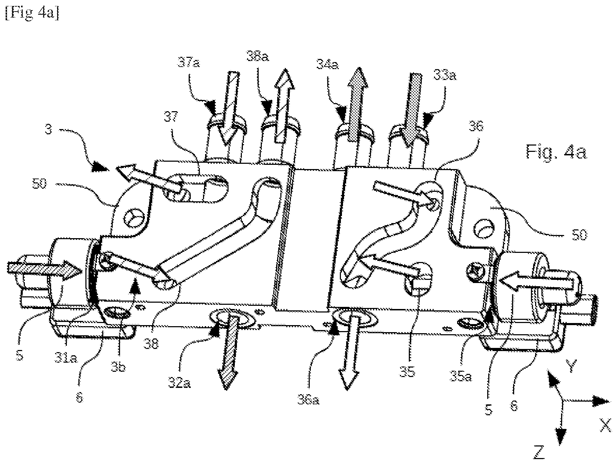

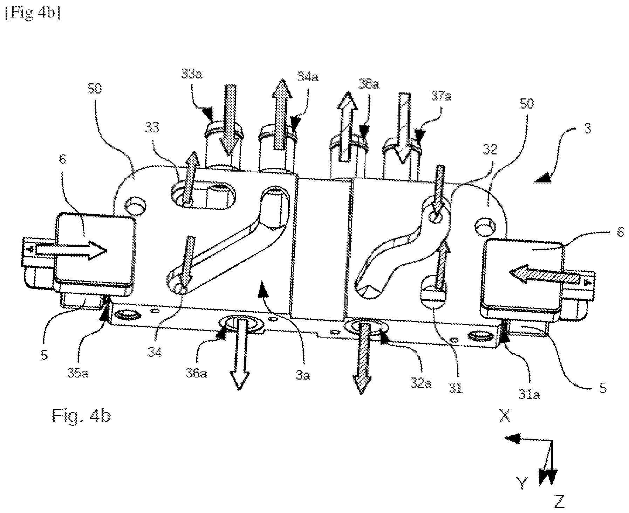

Les figures 4a et 4b montrent plus en détail un organe de distribution 3 selon deux orientations différentes. Comme le montrent les figures 3a, 3b ainsi que les figures 4a et 4b, l'organe de distribution 3 comporte une série de canaux 31, 32, 33, 34, 35, 36, 37, 38 ménagés en son sein et reliant les entrées 101a, 102a, 201a, 202a et sorties 101b, 102b, 201b, 202b de fluide caloporteur des premier 100 et deuxième 200 échangeurs de chaleur à plaques à des orifices de connexion 31a, 32a, 33a, 34a, 35a, 36a, 37a, 38a disposés sur ledit organe de distribution 3.

Ces orifices de connexion 31a, 32a, 33a, 34a, 35a, 36a, 37a, 38a permettent le branchement de l'organe de distribution 3 et donc du dispositif d'échange d'énergie calorifique 1 avec des boucles de circulation de fluide caloporteur entre lesquels des échanges d'énergie calorifiques vont avoir lieu.

L'organe de distribution 3 permet ainsi la distribution et la collecte des différents fluides caloporteurs circulant dans les échangeurs de chaleur à plaques 100, 200. De plus, le fait que l'organe de distribution 3 soit pris en sandwich entre le premier 100 et le deuxième 200 échangeur de chaleur permet d'obtenir un dispositif d'échange d'énergie calorifique 1 compact.

Au moins une partie des orifices de connexions 31a, 32a, 33a, 34a, 35a, 36a, 37a, 38a sont disposés sur la tranche de l'organe de distribution 3. Cela permet ainsi des branchements aisés avec les boucles de circulation de fluide caloporteur entre lesquels des échanges d'énergie calorifiques vont avoir lieu via le dispositif d'échange d'énergie calorifique 1.

L'organe de distribution 3 peut être notamment réalisé en matériau métallique comme par exemple en aluminium ou alliage d'aluminium. Les échangeurs de chaleur à plaques 100, 200 peuvent également être réalisés aluminium ou alliage d'aluminium. Cela permet ainsi lors d'une même étape de brasage de fixer entre elles les différentes plaques formant le faisceau de plaques des échangeurs de chaleur à plaques 100, mais également de fixer lesdits échangeurs de chaleur à plaques 100, 200 sur l'organe de distribution 3.

Il est cependant tout à fait possible d'imaginer un organe de distribution 3 réalisé dans une autre matière comme par exemple en matériau plastique ou composite. La fixation des échangeurs de chaleur à plaques 100, 200 peut alors se faire par d'autre moyens comme par exemple par collage ou au moyen de tirants.

Les canaux 31, 32, 33, 34, 35, 36, 37, 38 ainsi que les orifices de connexion 31a, 32a, 33a, 34a, 35a, 36a, 37a, 38a peuvent être moulés (par exemple dans le cadre d'un organe de distribution en matière plastique réalisé par moulage) ou bien usinés dans la masse.

L'organe de distribution 3 peut également comporter des pattes de fixation 50 afin de faciliter le montage du dispositif d'échange d'énergie calorifique 1 au sein du véhicule automobile.

Toujours dans un souci de compacité et de facilité de montage au sein d'un véhicule automobile, l'organe de distribution 3 peut comporter un orifice de connexion 35a, 37a d'arrivée de fluide caloporteur relié à la première 101a ou deuxième 102a entrée de fluide caloporteur du premier échangeur de chaleur 100. L'organe de distribution 3 peut notamment comporter un dispositif de détente 5 du fluide caloporteur fixé sur ledit orifice de connexion 35a, 37a d'arrivée. Plus particulièrement, le dispositif de détente 5 peut être un détendeur électronique comportant un boîtier de connexion 6. Sur les figures 1 à 3b, seul l'orifice de connexion 35a d'arrivée relié à la première entrée 101a de fluide caloporteur du premier échangeur de chaleur 100 comporte un tel dispositif de détente 5.

Cela est particulièrement utile pour un premier circuit de circulation A de fluide caloporteur au sein du premier échangeur de chaleur à plaques 100 connecté à une boucle de refroidissement comme un circuit de climatisation via cet orifice de connexion 35a d'arrivée. Le fluide caloporteur circulant dans ce premier circuit de circulation A du premier échangeur de chaleur à plaques 100 sera alors un fluide réfrigérant.

Il peut également en être de même pour le premier A' ou le deuxième B' circuit de circulation de fluide caloporteur du deuxième échangeur de chaleur à plaques 200. L'organe de distribution 3 peut ainsi comporter un dispositif de détente 5 du fluide caloporteur fixé sur l'orifice de connexion 31a, 33a d'arrivée de fluide caloporteur relié à une entrée 201a, 202a de fluide caloporteur du deuxième échangeur de chaleur 200.

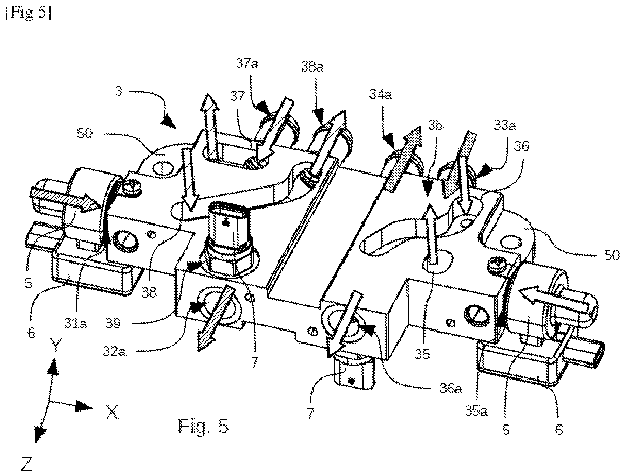

Selon un mode de réalisation particulier illustré à la figure 5, l'organe de distribution 3 comporte un orifice de connexion 32a, 34a de sortie de fluide caloporteur relié à une sortie 201b, 202b de fluide caloporteur du deuxième échangeur de chaleur à plaques 200. L'organe de distribution 3 comporte une ouverture 39 débouchant dans ledit orifice de connexion 32a, 34a de sortie de fluide caloporteur. Un capteur 7 de pression et/ou température du fluide caloporteur peut ainsi être inséré dans ladite ouverture 39 et mesurer la pression et/ou la température du fluide caloporteur en sortie du deuxième échangeur de chaleur à plaques 200. Sur la figure 5, seul l'orifice de connexion 32a de sortie de fluide caloporteur relié à la première sortie 201b du deuxième échangeur de chaleur 200 comporte une telle ouverture 39 et un capteur 7 de pression et/ou température.

Comme le montre toujours la figure 5, il peut également en être de même pour le premier A ou le deuxième B circuit de circulation de fluide caloporteur du premier échangeur de chaleur à plaques 100. L'organe de distribution 3 peut ainsi comporter une ouverture 39 et un capteur 7 de pression et/ou température au niveau de l'orifice de connexion 36a, 38a de sortie de fluide caloporteur relié à une sortie 101b 102b de fluide caloporteur du premier échangeur de chaleur 100.

Préférentiellement, l'orifice de connexion 31a, 35a d'arrivée de fluide caloporteur comportant un dispositif de détente 5 est connecté à un orifice de connexion 32a, 36a de sortie de fluide caloporteur par un circuit de circulation passant au sein de l'échangeur de chaleur à plaques 100 ou 200. Ainsi, il est possible de contrôler la pression du fluide caloporteur en entrée de l'échangeur de chaleur à plaques 100, 200 et de mesurer la pression et/ou la température en sortie dudit échangeur de chaleur à plaques 100, 200 en entrée selon les besoins. Par exemple dans le cadre d'un fluide réfrigérant, le dispositif de détente 5 peut contrôler la pression en réglant la quantité de fluide réfrigérant injectée dans l'échangeur de chaleur à plaques 100, 200 en fonction de la surchauffe du fludie réfrigérant à l'état gazeux en sortie de l'échangeur de chaleur à plaques 100, 200.

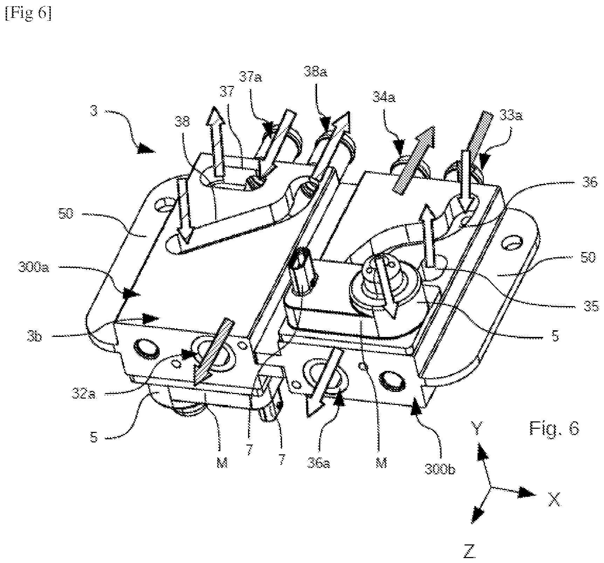

La figure 6 montre une variante du mode de réalisation de la figure 5. Dans cette variante, le dispositif de détente 5 et le capteur 7 de pression et/ou température du fluide caloporteur sont disposés au sein d'un module unique de montage M fixé sur l'organe de distribution 3. Cela permet de regrouper ces éléments et de limiter le nombre de connectiques. Ainsi le montage au sein du véhicule automobile est facilité.

Comme le montrent les figures 1 à 6 et notamment les figures 1 à 4b, l'organe de distribution 3 comporte plus précisément une première face 3a (visible sur la figure 4b) sur laquelle est disposé le deuxième échangeur de chaleur à plaques 200 et une deuxième face 3b (visible sur al figure 4a), opposée à la première face 3a, sur laquelle est disposé le premier échangeur de chaleur à plaques 100.

La première face 3a comporte alors :
- une première extrémité débouchante d'un premier canal 31 disposée en vis à vis de la première entrée 201a de fluide caloporteur du deuxième échangeur de chaleur 200 et reliée à un premier orifice de connexion 31a par ledit premier canal 31,
- une deuxième extrémité débouchante d'un deuxième canal 32 disposée en vis à vis de la première sortie 201b de fluide caloporteur du deuxième échangeur de chaleur 200 et reliée à un deuxième orifice de connexion 32a par ledit deuxième canal 32,
- une troisième extrémité débouchante d'un troisième canal 33 disposée en vis à vis de la deuxième entrée 202a de fluide caloporteur du deuxième échangeur de chaleur 200 et reliée à un troisième orifice de connexion 33a par ledit troisième canal 33, et
- une quatrième extrémité débouchante d'un quatrième canal 34 disposée en vis à vis de la deuxième sortie 202b de fluide caloporteur du deuxième échangeur de chaleur 200 et reliée à un quatrième orifice de connexion 34a par ledit quatrième canal 34.

La deuxième face 3b comporte quant à elle :
- une cinquième extrémité débouchante d'un cinquième canal 35 disposée en vis à vis de la première entrée de fluide caloporteur 101a du premier échangeur de chaleur 100 et reliée à un cinquième orifice de connexion 35a par ledit cinquième canal 35,
- une sixième extrémité débouchante d'un sixième canal 36 disposée en vis à vis de la première sortie 101b de fluide caloporteur du premier échangeur de chaleur 100 et reliée à un sixième orifice de connexion 36a par ledit sixième canal 36,
- une septième extrémité débouchante d'un septième canal 37 disposée en vis à vis de la deuxième entrée 102a de fluide caloporteur du premier échangeur de chaleur 100 et reliée à un septième orifice de connexion 37a par ledit septième canal 37, et
- une huitième extrémité débouchante d'un huitième canal 38 disposée en vis à vis de la deuxième sortie 102b de fluide caloporteur du premier échangeur de chaleur 100 et reliée à un huitième orifice 38a de connexion par ledit huitième canal 38.

Selon un premier mode de réalisation illustré aux figures 1 à 5, l'organe de distribution 3 est réalisé en une seule pièce.

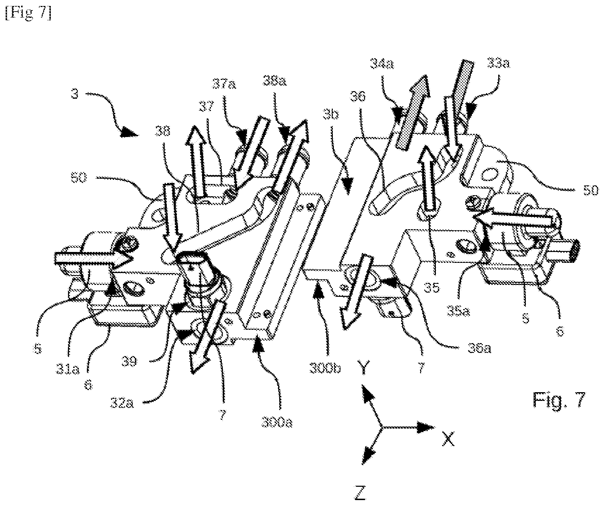

Selon un deuxième mode de réalisation illustré aux figures 6 et 7, l'organe de distribution 3 peut être réalisé en deux éléments. Un premier élément 300a comporte alors :
- une première face 3a sur laquelle est disposée le deuxième échangeur de chaleur 200, ladite première face 3a comportant la première extrémité débouchante du premier canal 31 et la deuxième extrémité débouchante du deuxième canal 32, et
- une deuxième face 3b sur laquelle est disposée le premier échangeur de chaleur 100 ladite deuxième face 3b comportant la septième extrémité débouchante du septième canal 37 et la huitième extrémité débouchante du huitième canal 38.

Un deuxième élément 300b comporte quant à lui :
- une première face 3a sur laquelle est disposée le deuxième échangeur de chaleur 200, ladite première face 3a comportant la troisième extrémité débouchante du troisième canal 33 et la quatrième extrémité débouchante du quatrième canal 34, et
- une deuxième face 3b sur laquelle est disposée le premier échangeur de chaleur 100, ladite deuxième face 3b comportant la cinquième extrémité débouchante du cinquième canal 35 et la sixième extrémité débouchante du sixième canal 36.

L'organe de distribution 3 avec sa multitude d'orifice de connexion 31a, 32a, 33a, 34a, 35a, 36a 37a, 38a permet au dispositif d'échange d'énergie calorifique 1 de se connecter à différentes boucles de circulation afin de former différentes architectures.

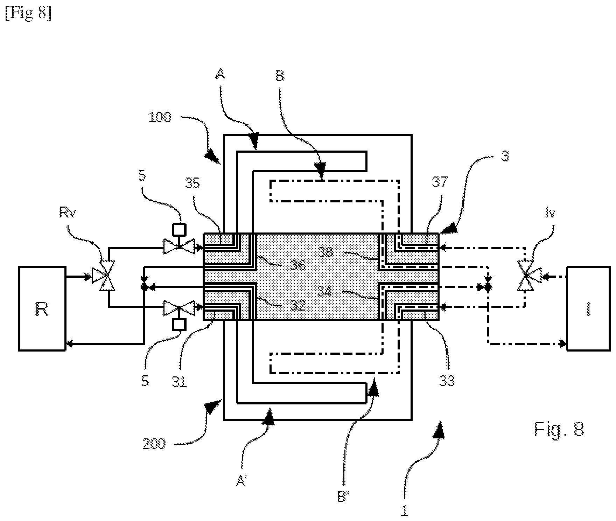

La figure 8 montre un premier exemple d'architecture dans laquelle le dispositif d'échange d'énergie calorifique 1 est connecté à une boucle de refroidissement R et à une première boucle I de circulation de fluide caloporteur.

La boucle de refroidissement R est connectée en parallèle d'une part au premier échangeur de chaleur à plaques 100 via le cinquième 35 et le sixième 36 premier 31 et le deuxième 32 canal et d'autre part au deuxième échangeur de chaleur à plaques 200 via le premier 31 et le deuxième 32 canal. En amont des premier 31 et cinquième 35 canaux, l'organe de distribution 3 peut notamment comporter des dispositifs de détente 5. La distribution du fluide réfrigérant circulant dans la boucle de refroidissement R peut être dirigée selon les besoins vers le premier 100 et/ou le deuxième 200 échangeur de chaleur à plaques au moyen par exemple d'une vanne trois-voies Rv.

La première boucle I est connectée quant à elle en parallèle d'une part au premier échangeur de chaleur à plaques 100 via le septième 37 et le huitième 38 canal et d'autre part au deuxième échangeur de chaleur à plaques 200 via le troisième 33 et le quatrième 34 canal. La distribution du fluide caloporteur circulant dans la première boucle I peut être dirigée selon les besoins vers le premier 100 et/ou le deuxième 200 échangeur de chaleur à plaques au moyen par exemple d'une vanne trois-voies Iv.

Cette première boucle I peut être par exemple une boucle de gestion thermique des batteries d'un véhicule électrique ou hybride. Il est ainsi possible, lors d'une charge rapide, d'augmenter la puissance de refroidissement du dispositif d'échange d'énergie calorifique 1 et utilisant simultanément le premier 100 et le deuxième 200 échangeur de chaleur à plaques. En utilisation dite normale, un seul échangeur de chaleur à plaques 100, 200 est utilisé ce qui limite les risques de baisse de la puissance thermique disponible du fait de la baisse des débits fluidiques et de la mauvaise distribution dans le faisceau de plaques pour un échangeur de chaleur à plaques surdimensionné.

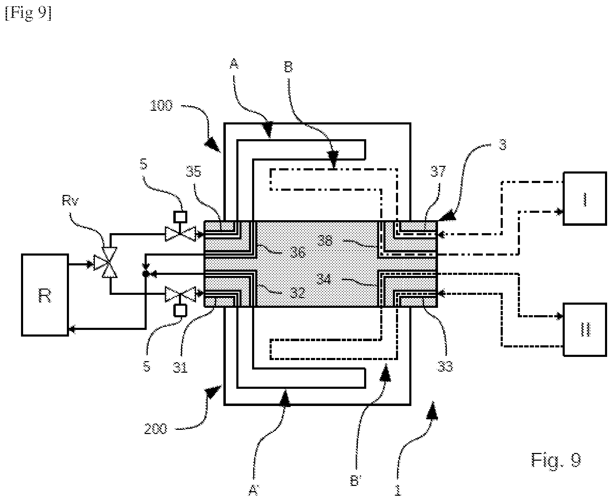

La figure 9 montre un deuxième exemple d'architecture dans laquelle le dispositif d'échange d'énergie calorifique 1 est connecté à une boucle de refroidissement R d'une part et d'autre part à une première boucle I et une deuxième boucle II de circulation de fluide caloporteur.

La boucle de refroidissement R est ici connectée comme dans le premier exemple de la figure 8. La première boucle I est quant à elle uniquement connectée au premier échangeur de chaleur à plaques 100 via le septième 37 et le huitième 38 canal. La deuxième boucle II est quant à elle uniquement connectée au deuxième échangeur de chaleur à plaques 200 via le troisième 33 et le quatrième 34 canal.

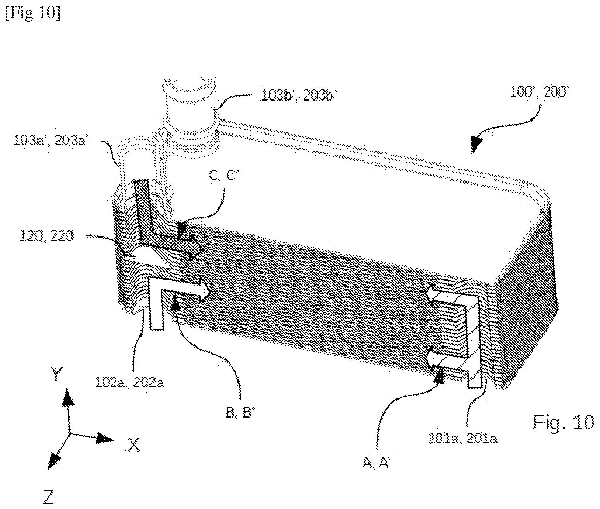

Selon un mode de réalisation particulier illustré à la figure 10, au moins un des premier 100' ou deuxième 200' échangeurs de chaleur peut comporter un troisième circuit C, C' de circulation dont l'entrée 103a', 203a' et la sortie 103b', 203b' de fluide caloporteur sont disposées en dehors de l'organe de distribution 3. L'échangeur de chaleur à plaques 100', 200' comporte une plaque 120, 220, séparant par exemple le deuxième et le troisième circuit C, C' de circulation. Ces deux circuits sont alors superposés dans l'empilement de plaques. Le premier circuit A, A' de circulation de fluide est quant à lui configuré pour laisser circuler le fluide caloporteur sur toute la hauteur de l'empilement de plaques et ainsi permettre les échanges d'énergie calorifique à la fois avec le deuxième B, B' et le troisième C, C' circuit de circulation.

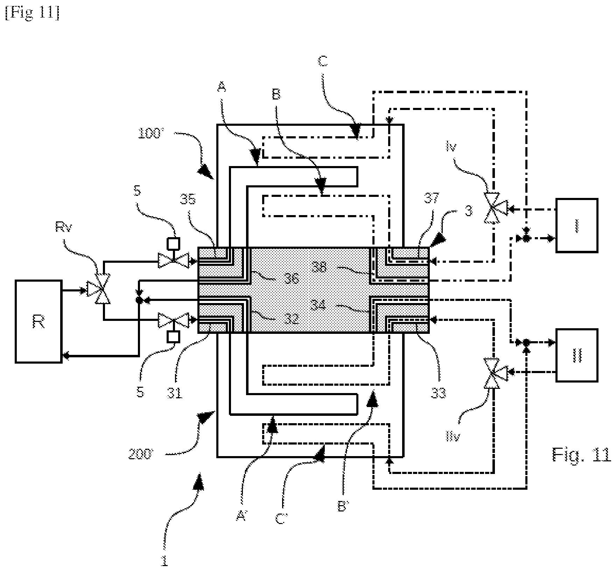

La figure 11 montre un troisième exemple d'architecture dans laquelle les premier 100' et deuxième 200' échangeurs de chaleur à plaques comportent un troisième circuit C, C' de circulation. Ce troisième exemple d'architecture est similaire au deuxième exemple de la figure 9 à la différence que la première boucle I est également connectée en parallèle au troisième circuit C de circulation du premier échangeur de chaleur à plaques 100 et à la différence que la deuxième boucle II est également connectée en parallèle au troisième circuit C' de circulation du deuxième échangeur de chaleur à plaques 200. La distribution du fluide caloporteur circulant dans la première boucle I peut être dirigée selon les besoins vers le deuxième circuit B de circulation et/ou vers le troisième circuit C de circulation du premier échangeur de chaleur à plaques 100 au moyen par exemple d'une vanne trois-voies Iv. La distribution du fluide caloporteur circulant dans la deuxième boucle II peut être dirigée selon les besoins vers le deuxième circuit B' de circulation et/ou vers le troisième circuit C' de circulation du deuxième échangeur de chaleur à plaques 200 au moyen par exemple d'une vanne trois-voies IIv.

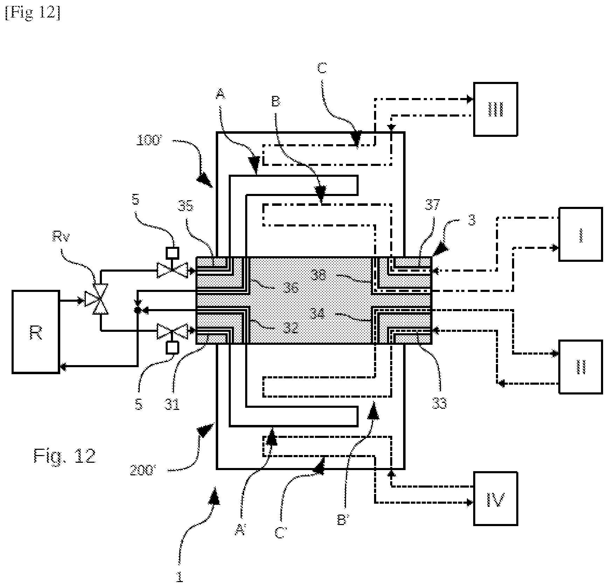

La figure 12 montre un quatrième exemple d'architecture dans laquelle les premier 100' et deuxième 200' échangeurs de chaleur à plaques comportent un troisième circuit C' de circulation. Ce quatrième exemple d'architecture est similaire au troisième exemple de la figure 11 à la différence que le troisième circuit C de circulation du premier échangeur de chaleur à plaques 100' est connecté à une troisième boucle III et à la différence que le troisième circuit C' de circulation du deuxième échangeur de chaleur à plaques 200' est connecté à une quatrième boucle IV.

Ainsi, on voit bien que le dispositif d'échange d'énergie calorifique 1 permet non seulement un gain de compacité mais également permet un montage facilité dans le véhicule automobile. De plus, sa structure avec de nombreux orifices de connexion 31a, 32a, 33a, 34a, 35a, 36a, 37a, 38a, assurant la liaison avec les circuits de circulation A ,A', B, B', C, C' des échangeurs de chaleur à plaques 100, 200, permet une grande modularité de connexions qui peuvent répondre aux différents besoins.

## Revendications

1. Dispositif d'échange d'énergie calorifique (1) comportant un premier (100) et un deuxième (200) échangeur de chaleur à plaques, chaque échangeur de chaleur à plaques (100, 200) étant configuré pour permettre les échanges d'énergie calorifique entre au moins deux fluides caloporteurs à des températures différentes, ledit dispositif d'échange (1) comportant en outre un organe de distribution (3) disposé en sandwich entre les premier (100) et deuxième (200) échangeurs de chaleur à plaques, ledit organe de distribution (3) comportant une série de canaux (31, 32, 33, 34, 35, 36, 37, 38) ménagés en son sein, lesdits canaux (31, 32, 33, 34, 35, 36, 37, 38) reliant des entrées et sorties de fluide caloporteur des premier (100) et deuxième (200) échangeurs de chaleur à plaques à des orifices de connexion (31a, 32a, 33a, 34a, 35a, 36a, 37a, 38a) disposés sur ledit organe de distribution (3), l'organe de distribution (3) comportant un orifice de connexion (31a, 33a, 35a, 37a) d'arrivée de fluide caloporteur relié à une entrée (101a, 201a, 201a, 202a) de fluide caloporteur d'un des échangeur de chaleur à plaques (100, 200), **caractérisé en ce que** l'organe de distribution (3) comporte un dispositif de détente (5) du fluide caloporteur fixé sur ledit orifice de connexion (31a, 33a, 35a, 37a) d'arrivée de fluide caloporteur.

2. Dispositif d'échange d'énergie calorifique (1) selon l'une quelconque des revendications précédentes, **caractérisé en ce que** l'organe de distribution (3) comporte un orifice de connexion (32a, 34a, 36a, 38a) de sortie de fluide caloporteur relié à une sortie (101b, 102b, 201b, 202b) de fluide caloporteur d'un des échangeur de chaleur à plaques (100, 200), l'organe de distribution (3) comportant une ouverture (39) débouchant dans ledit orifice de connexion (32a, 34a, 36a, 38a) de sortie de fluide caloporteur, un capteur (7) de pression et/ou température du fluide caloporteur étant inséré dans ladite ouverture (39).

3. Dispositif d'échange d'énergie calorifique (1) selon les revendications 1 et 2 en combinaison, **caractérisé en ce que** l'orifice de connexion (31a, 35a) d'arrivé de fluide caloporteur comportant un dispositif de détente (5) est connecté à un orifice de connexion (32a, 36a) de sortie de fluide caloporteur par un circuit de circulation (A, A', B, B', C, C') passant au sein de l'échangeur de chaleur à plaques (100, 200).

4. Dispositif d'échange d'énergie calorifique (1) selon la revendication précédente, **caractérisé en ce que** le dispositif de détente (5) et le capteur (7) de pression et/ou température du fluide caloporteur sont disposés au sein d'un module unique de montage (M) fixé sur l'organe de distribution (3).

5. Dispositif d'échange d'énergie calorifique (1) selon l'une quelconque des revendications précédentes, **caractérisé en ce que** les premier (100) et deuxième (200) échangeurs de chaleur à plaques comportent chacun un premier circuit (A, A') de circulation de fluide caloporteur reliant une première entrée (101a, 201a) et une première sortie (101b, 202b) de fluide caloporteur et un deuxième circuit (B, B') de circulation reliant une deuxième entrée (102a, 202a) et une deuxième sortie (102b, 202b) de fluide caloporteur,
l'organe de distribution comportant :
∘ une première face (3a) sur laquelle est disposée le deuxième échangeur de chaleur à plaques (200), ladite première face (3a) comportant:
▪ une première extrémité débouchante d'un premier canal (31) disposée en vis à vis de la première entrée (201a) de fluide caloporteur dudit deuxième échangeur de chaleur à plaques (200) et reliée à un premier orifice de connexion (31a) par ledit premier canal (31),
▪ une deuxième extrémité débouchante d'un deuxième canal (32) disposée en vis à vis de la première sortie (201b) de fluide caloporteur dudit deuxième échangeur de chaleur à plaques (200) et reliée à un deuxième orifice de connexion (32a) par ledit deuxième canal (32),
▪ une troisième extrémité débouchante d'un troisième canal (33) disposée en vis à vis de la deuxième entrée (202a) de fluide caloporteur dudit deuxième échangeur de chaleur à plaques (200) et reliée à un troisième orifice de connexion (33a) par ledit troisième canal (33),
▪ une quatrième extrémité débouchante d'un quatrième canal (34) disposée en vis à vis de la deuxième sortie (202b) de fluide caloporteur dudit deuxième échangeur de chaleur à plaques (200) et reliée à un quatrième orifice de connexion (34a) par ledit quatrième canal (34),
∘ une deuxième face (3b) sur laquelle est disposée le premier échangeur de chaleur à plaques (100), ladite deuxième face (3b) comportant:
▪ une cinquième extrémité débouchante d'un cinquième canal (35) disposée en vis à vis de la première entrée de fluide caloporteur (101a) dudit premier échangeur de chaleur à plaques (100) et reliée à un cinquième orifice de connexion (35a) par ledit cinquième canal (35),
▪ une sixième extrémité débouchante d'un sixième canal (36) disposée en vis à vis de la première sortie (101b) de fluide caloporteur dudit premier échangeur de chaleur à plaques (100) et reliée à un sixième orifice de connexion (36a) par ledit sixième canal (36),
▪ une septième extrémité débouchante d'un septième canal (37) disposée en vis à vis de la deuxième entrée (102a) de fluide caloporteur dudit premier échangeur de chaleur à plaques (100) et reliée à un septième orifice de connexion (37a) par ledit septième canal (37),
▪ une huitième extrémité débouchante d'un huitième canal (38) disposée en vis à vis de la deuxième sortie (102b) de fluide caloporteur dudit premier échangeur de chaleur à plaques (100) et reliée à un huitième orifice (38a) de connexion par ledit huitième canal (38).

6. Dispositif d'échange d'énergie calorifique (1) selon la revendication précédente, **caractérisé en ce qu'**au moins un des premier (100') ou deuxième (200) échangeurs de chaleur à plaques comporte un troisième circuit (C, C') de circulation dont l'entrée (103a') et la sortie (103b') de fluide caloporteur sont disposées en dehors de l'organe de distribution (3).

7. Dispositif d'échange d'énergie calorifique (1) selon l'une quelconque des revendications 5 ou 6, **caractérisé en ce que** l'organe de distribution (3) est réalisé en deux éléments, un premier élément (300a) comportant :
∘ une première face (3a) sur laquelle est disposée le deuxième échangeur de chaleur à plaques (200), ladite première face (3a) comportant la première extrémité débouchante du premier canal (31) et la deuxième extrémité débouchante du deuxième canal (32), et
∘ une deuxième face (3b) sur laquelle est disposée le premier échangeur de chaleur à plaques (100), ladite deuxième face (3b) comportant la septième extrémité débouchante du septième canal (37) et la huitième extrémité débouchante du huitième canal (38), un deuxième élément (300b) comportant :
∘ une première face (3a) sur laquelle est disposée le deuxième échangeur de chaleur à plaques (200), ladite première face (3a) comportant la troisième extrémité débouchante du troisième canal (33) et la quatrième extrémité débouchante du quatrième canal (34), et
∘ une deuxième face (3b) sur laquelle est disposée le premier échangeur de chaleur à plaques (100), ladite deuxième face (3b) comportant la cinquième extrémité débouchante du cinquième canal (35) et la sixième extrémité débouchante du sixième canal (36).

8. Dispositif d'échange d'énergie calorifique (1) selon l'une quelconque des revendications 1 à 6, **caractérisé en ce que** l'organe de distribution (3) est réalisé en une seule pièce.

9. Dispositif d'échange d'énergie calorifique (1) selon l'une quelconque des revendications précédentes, **caractérisé en ce que** au moins une partie des orifices de connexions (31a, 32a, 33a, 34a, 35a, 36a, 37a, 38a) sont disposés sur la tranche de l'organe de distribution (3).

## Patentansprüche

1. Vorrichtung zum Wärmeenergieaustausch (1), die einen ersten (100) und einen zweiten (200) Plattenwärmetauscher umfasst, wobei jeder Plattenwärmetauscher (100, 200) dazu konfiguriert ist, den Austausch von Wärmeenergie zwischen mindestens zwei Wärmeträgerfluiden mit unterschiedlichen Temperaturen zu ermöglichen, wobei die Austauschvorrichtung (1) ferner ein Verteilerorgan (3) umfasst, das zwischen dem ersten (100) und dem zweiten (200) Plattenwärmetauscher eingeklemmt angeordnet ist, wobei das Verteilerorgan (3) eine Reihe von Kanälen (31, 32, 33, 34, 35, 36, 37, 38) umfasst, die in seinem Inneren eingerichtet sind, wobei die Kanäle (31, 32, 33, 34, 35, 36, 37, 38) Wärmeträgerfluideinlässe und -auslässe des ersten (100) und des zweiten (200) Plattenwärmetauschers mit Verbindungsanschlüssen (31a, 32a, 33a, 34a, 35a, 36a, 37a, 38a), die an dem Verteilerorgan (3) angeordnet sind, verbinden, wobei das Verteilerorgan (3) einen Verbindungsanschluss (31a, 33a, 35a, 37a) für einen Zufluss von Wärmeträgerfluid umfasst, der mit einem Wärmeträgerfluideinlass (101a, 201a, 201a, 202a) von einem der Plattenwärmetauscher (100, 200) verbunden ist, **dadurch gekennzeichnet, dass** das Verteilerorgan (3) eine Entspannungsvorrichtung (5) für das Wärmeträgerfluid umfasst, die an dem Verbindungsanschluss (31a, 33a, 35a, 37a) für den Zufluss von Wärmeträgerfluid befestigt ist.

2. Vorrichtung zum Wärmeenergieaustausch (1) nach einem beliebigen der vorhergehenden Ansprüche, **dadurch gekennzeichnet, dass** das Verteilerorgan (3) einen Verbindungsanschluss (32a, 34a, 36a, 38a) für einen Abfluss von Wärmeträgerfluid umfasst, der mit einem Wärmeträgerfluidauslass (101b, 102b, 201b, 202b) von einem der Plattenwärmetauscher (100, 200) verbunden ist, wobei das Verteilerorgan (3) eine Öffnung (39) umfasst, die in dem Verbindungsanschluss (32a, 34a, 36a, 38a) für einen Abfluss von Wärmeträgerfluid mündet, wobei ein Druck- und/oder Temperatursensor (7) für das Wärmeträgerfluid in die Öffnung (39) eingefügt ist.

3. Vorrichtung zum Wärmeenergieaustausch (1) nach den Ansprüchen 1 und 2 in Kombination, **dadurch gekennzeichnet, dass** der Verbindungsanschluss (31a, 35a) für einen Zufluss von Wärmeträgerfluid, der eine Entspannungsvorrichtung (5) umfasst, über einen Zirkulationskreislauf (A, A', B, B', C, C'), der durch das Innere des Plattenwärmetauschers (100, 200) verläuft, mit einem Verbindungsanschluss (32a, 36a) für einen Abfluss von Wärmeträgerfluid verbunden ist.

4. Vorrichtung zum Wärmeenergieaustausch (1) nach dem vorhergehenden Anspruch, **dadurch gekennzeichnet, dass** die Entspannungsvorrichtung (5) und der Druck- und/oder Temperatursensor (7) für das Wärmeträgerfluid innerhalb eines einzigen Montagemoduls (M) angeordnet sind, das an dem Verteilerorgan (3) befestigt ist.

5. Vorrichtung zum Wärmeenergieaustausch (1) nach einem beliebigen der vorhergehenden Ansprüche, **dadurch gekennzeichnet, dass** der erste (100) und der zweite (200) Plattenwärmetauscher jeweils einen ersten Wärmeträgerfluid-Zirkulationskreislauf (A, A'), der einen ersten Wärmeträgerfluideinlass (101a, 201a) und einen zweiten Wärmeträgerfluidauslass (101b, 202b) verbindet, und einen zweiten Zirkulationskreislauf (B, B'), der einen zweiten Wärmeträgerfluideinlass (102a, 202a) und einen zweiten Wärmeträgerfluidauslass (102b, 202b)verbindet, umfassen,
wobei das Verteilerorgan Folgendes umfasst:
o eine erste Seite (3a), auf der der zweite Plattenwärmetauscher (200) angeordnet ist, wobei die erste Seite (3a) Folgendes umfasst:
▪ ein erstes Mündungsende eines ersten Kanals (31), das gegenüber dem ersten Wärmeträgerfluideinlass (201a) des zweiten Plattenwärmetauschers (200) angeordnet ist und durch den ersten Kanal (31) mit einem ersten Verbindungsanschluss (31a) verbunden ist,
▪ ein zweites Mündungsende eines zweiten Kanals (32), das gegenüber dem ersten Wärmeträgerfluidauslass (201b) des zweiten Plattenwärmetauschers (200) angeordnet ist und durch den zweiten Kanal (32) mit einem zweiten Verbindungsanschluss (32a) verbunden ist,
▪ ein drittes Mündungsende eines dritten Kanals (33), das gegenüber dem zweiten Wärmeträgerfluideinlass (202a) des zweiten Plattenwärmetauschers (200) angeordnet ist und durch den dritten Kanal (33) mit einem dritten Verbindungsanschluss (33a) verbunden ist,
▪ ein viertes Mündungsende eines vierten Kanals (34), das gegenüber dem zweiten Wärmeträgerfluidauslass (202b) des zweiten Plattenwärmetauschers (200) angeordnet ist und durch den vierten Kanal (34) mit einem vierten Verbindungsanschluss (34a) verbunden ist,
o eine zweite Seite (3b), auf der der erste Plattenwärmetauscher (100) angeordnet ist, wobei die zweite Seite (3b) Folgendes umfasst:
▪ ein fünftes Mündungsende eines fünften Kanals (35), das gegenüber dem ersten Wärmeträgerfluideinlass (101a) des ersten Plattenwärmetauschers (100) angeordnet ist und durch den fünften Kanal (35) mit einem fünften Verbindungsanschluss (35a) verbunden ist,
▪ ein sechstes Mündungsende eines sechsten Kanals (36), das gegenüber dem ersten Wärmeträgerfluidauslass (101b) des ersten Plattenwärmetauschers (100) angeordnet ist und durch den sechsten Kanal (36) mit einem sechsten Verbindungsanschluss (36a) verbunden ist,
▪ ein siebtes Mündungsende eines siebten Kanals (37), das gegenüber dem zweiten Wärmeträgerfluideinlass (102a) des ersten Plattenwärmetauschers (100) angeordnet ist und durch den siebten Kanal (37) mit einem siebten Verbindungsanschluss (37a) verbunden ist,
▪ ein achtes Mündungsende eines achten Kanals (38), das gegenüber dem zweiten Wärmeträgerfluidauslass (102b) des ersten Plattenwärmetauschers (100) angeordnet ist und durch den achten Kanal (38) mit einem achten Verbindungsanschluss (38a) verbunden ist.

6. Vorrichtung zum Wärmeenergieaustausch (1) nach dem vorhergehenden Anspruch, **dadurch gekennzeichnet, dass** mindestens einer von dem ersten (100') oder dem zweiten (200) Plattenwärmetauscher einen dritten Zirkulationskreislauf (C, C') umfasst, dessen Wärmeträgerfluideinlass (103a') und -auslass (103b') außerhalb des Verteilerorgans (3) angeordnet sind.

7. Vorrichtung zum Wärmeenergieaustausch (1) nach einem beliebigen der Ansprüche 5 oder 6, **dadurch gekennzeichnet, dass** das Verteilerorgan (3) aus zwei Elementen hergestellt ist, wobei ein erstes Element (300a) Folgendes umfasst:
o eine erste Seite (3a), auf der der zweite Plattenwärmetauscher (200) angeordnet ist, wobei die erste Seite (3a) das erste Mündungsende des ersten Kanals (31) und das zweite Mündungsende des zweiten Kanals (32) umfasst, und
o eine zweite Seite (3b), auf der der erste Plattenwärmetauscher (100) angeordnet ist, wobei die zweite Seite (3b) das siebte Mündungsende des siebten Kanals (37) und das achte Mündungsende des achten Kanals (38) umfasst, wobei ein zweites Element (300b) Folgendes umfasst:
o eine erste Seite (3a), auf der der zweite Plattenwärmetauscher (200) angeordnet ist, wobei die erste Seite (3a) das dritte Mündungsende des dritten Kanals (33) und das vierte Mündungsende des vierten Kanals (34) umfasst, und
o eine zweite Seite (3b), auf der der erste Plattenwärmetauscher (100) angeordnet ist, wobei die zweite Seite (3b) das fünfte Mündungsende des fünften Kanals (35) und das sechste Mündungsende des sechsten Kanals (36) umfasst.

8. Vorrichtung zum Wärmeenergieaustausch (1) nach einem beliebigen der Ansprüche 1 bis 6, **dadurch gekennzeichnet, dass** das Verteilerorgan (3) einstückig hergestellt ist.

9. Vorrichtung zum Wärmeenergieaustausch (1) nach einem beliebigen der vorhergehenden Ansprüche, **dadurch gekennzeichnet, dass** mindestens ein Teil der Verbindungsanschlüsse (31a, 32a, 33a, 34a, 35a, 36a, 37a, 38a) auf dem Rand des Verteilerorgans (3) angeordnet sind.

## Claims

1. Heat-energy exchange device (1) comprising a first (100) and a second (200) plate heat exchanger, each plate heat exchanger (100, 200) being configured to allow exchanges of heat energy between at least two heat transfer fluids at different temperatures, said exchange device (1) moreover comprising a distribution member (3) sandwiched between the first (100) and second (200) plate heat exchangers, said distribution member (3) comprising a series of channels (31, 32, 33, 34, 35, 36, 37, 38) made within it, said channels (31, 32, 33, 34, 35, 36, 37, 38) connecting heat transfer fluid inlets and outlets of the first (100) and second (200) plate heat exchangers to connection ports (31a, 32a, 33a, 34a, 35a, 36a, 37a, 38a) disposed on said distribution member (3), the distribution member (3) comprising a heat transfer fluid intake connection port (31a, 33a, 35a, 37a) connected to a heat transfer fluid inlet (101a, 201a, 201a, 202a) of one of the plate heat exchangers (100, 200), **characterized in that** the distribution member (3) comprises a heat transfer fluid expansion device (5) secured to said heat transfer fluid intake connection port (31a, 33a, 35a, 37a).

2. Heat-energy exchange device (1) according to any one of the preceding claims, **characterized in that** the distribution member (3) comprises a heat transfer fluid outlet connection port (32a, 34a, 36a, 38a) connected to a heat transfer fluid outlet (101b, 102b, 201b, 202b) of one of the plate heat exchangers (100, 200), the distribution member (3) comprising an opening (39) emerging in said heat transfer fluid outlet connection port (32a, 34a, 36a, 38a), a heat transfer fluid pressure and/or temperature sensor (7) being inserted in said opening (39).

3. Heat-energy exchange device (1) according to Claims 1 and 2 in combination, **characterized in that** the heat transfer fluid intake connection port (31a, 35a) comprising an expansion device (5) is connected to a heat transfer fluid outlet connection port (32a, 36a) by a circulation circuit (A, A', B, B', C, C') passing through the plate heat exchanger (100, 200).

4. Heat-energy exchange device (1) according to the preceding claim, **characterized in that** the expansion device (5) and the heat transfer fluid pressure and/or temperature sensor (7) are disposed within a single assembly module (M) secured to the distribution member (3) .

5. Heat-energy exchange device (1) according to any one of the preceding claims, **characterized in that** the first (100) and second (200) plate heat exchangers each comprise a first heat transfer fluid circulation circuit (A, A') connecting a first heat transfer fluid inlet (101a, 201a) and a first heat transfer fluid outlet (101b, 202b) and a second circulation circuit (B, B') connecting a second heat transfer fluid inlet (102a, 202a) and a second heat transfer fluid outlet (102b, 202b),
the distribution member comprising:
∘ a first face (3a) on which the second plate heat exchanger (200) is disposed, said first face (3a) comprising:
▪ a first emerging end of a first channel (31) positioned opposite the first heat transfer fluid inlet (201a) of said second plate heat exchanger (200) and connected to a first connection port (31a) by said first channel (31),
▪ a second emerging end of a second channel (32) positioned opposite the first heat transfer fluid outlet (201b) of said second plate heat exchanger (200) and connected to a second connection port (32a) by said second channel (32),
▪ a third emerging end of a third channel (33) positioned opposite the second heat transfer fluid inlet (202a) of said second plate heat exchanger (200) and connected to a third connection port (33a) by said third channel (33),
▪ a fourth emerging end of a fourth channel (34) positioned opposite the second heat transfer fluid outlet (202b) of said second plate heat exchanger (200) and connected to a fourth connection port (34a) by said fourth channel (34),
∘ a second face (3b) on which the first plate heat exchanger (100) is disposed, said second face (3b) comprising:
▪ a fifth emerging end of a fifth channel (35) positioned opposite the first heat transfer fluid inlet (101a) of said first plate heat exchanger (100) and connected to a fifth connection port (35a) by said fifth channel (35),
▪ a sixth emerging end of a sixth channel (36) positioned opposite the first heat transfer fluid outlet (101b) of said first plate heat exchanger (100) and connected to a sixth connection port (36a) by said sixth channel (36),
▪ a seventh emerging end of a seventh channel (37) positioned opposite the second heat transfer fluid inlet (102a) of said first plate heat exchanger (100) and connected to a seventh connection port (37a) by said seventh channel (37),
▪ an eighth emerging end of an eighth channel (38) positioned opposite the second heat transfer fluid outlet (102b) of said first plate heat exchanger (100) and connected to an eighth connection port (38a) by said eighth channel (38).

6. Heat-energy exchange device (1) according to the preceding claim, **characterized in that** at least one of the first (100') or second (200) plate heat exchangers comprises a third circulation circuit (C, C'), the heat transfer fluid inlet (103a') and outlet (103b') of which are disposed outside the distribution member (3).

7. Heat-energy exchange device (1) according to either one of Claims 5 and 6, **characterized in that** the distribution member (3) is made up of two components,
a first component (300a) comprising:
∘ a first face (3a) on which the second plate heat exchanger (200) is disposed, said first face (3a) comprising the first emerging end of the first channel (31) and the second emerging end of the second channel (32), and
∘ a second face (3b) on which the first plate heat exchanger (100) is disposed, said second face (3b) comprising the seventh emerging end of the seventh channel (37) and the eighth emerging end of the eighth channel (38), a second component (300b) comprising:
∘ a first face (3a) on which the second plate heat exchanger (200) is arranged, said first face (3a) comprising the third emerging end of the third channel (33) and the fourth emerging end of the fourth channel (34), and
∘ a second face (3b) on which the first plate heat exchanger (100) is disposed, said second face (3b) comprising the fifth emerging end of the fifth channel (35) and the sixth emerging end of the sixth channel (36) .

8. Heat-energy exchange device (1) according to any one of Claims 1 to 6, **characterized in that** the distribution member (3) is made in one piece.

9. Heat-energy exchange device (1) according to any one of the preceding claims, **characterized in that** at least some of the connection ports (31a, 32a, 33a, 34a, 35a, 36a, 37a, 38a) are disposed on the edge surface of the distribution member (3).
